# EUROPEAN PATENT APPLICATION

(11) **EP 4 492 049 A1**
(43) Date of publication of application: **15.01.2025**
(21) Application number: 23904049.6
(22) Date of filing: 15.12.2023
(51) Int. Cl.: G01N 27/26, G01N 27/02, H01M 4/04, H01M 4/1391, H01M 4/62, H01M 4/02

(54) **ELECTRODE SLURRY INSPECTION METHOD**

(30) Priority: 15.12.2022 KR 20220175750
(71) Applicant: LG Energy Solution, Ltd., Seoul 07335 (KR)
(72) Inventor: HEO, Yeonhyuk, Daejeon 34122 (KR); KIM, Hyuk, Daejeon 34122 (KR); KIM, Min Kyoun, Daejeon 34122 (KR); RAH, Kyun Il, Daejeon 34122 (KR)
(74) Representative: Goddar, Heinz J.
(86) International application number: PCT/KR2023/020749
(87) International publication number: WO 2024/128850

(57) **Abstract**

The present invention relates to an electrode slurry inspection method, and specifically, provides an electrode slurry inspection method for quantifying physical deterioration of a positive electrode slurry (gelation, particle agglomeration and the like) by using an electrochemical method.

## Description

### Technical Field

This application claims the benefit of priority from Korean Patent Application No. 10-2022-0175750, filed on December 15, 2022, the entire disclosure of which is incorporated by reference herein.

The present invention relates to a method for inspecting an electrode slurry, and more specifically, to a method for inspecting an electrode slurry that quantifies physical deterioration (gelation, particle agglomeration, etc.) of a positive electrode slurry using an electrochemical method.

### Background Art

For secondary batteries, electrodes can be manufactured by applying electrode slurry to a substrate such as a metal foil and then drying it.

The electrode slurry contains an active material, and specifically, it may be prepared by kneading the active material, a conductive material, a binder, and a solvent.

Although rheological properties such as viscosity are regularly monitored in the electrode slurry plant, electrode slurry with unexpected physical deterioration (partial solidification, precipitation, etc.) may be introduced into the manufacturing process of electrode, which may ultimately have a negative effect on the performance and lifespan of the battery.

Specifically, if the slurry with modified rheological properties is applied to the current collector under existing coating conditions, it may cause defects in the uniformity of the interface state of the electrode, which may lead to battery failure.

To solve this problem, the physical properties of the electrode slurry can be measured using a viscometer, etc., but it requires expensive measuring instruments and it is difficult to detect non-uniform phenomena (gelation, agglomeration, etc.) such as precipitation and coagulation of fine slurry.

Therefore, there is a need for a method that can accurately and quickly detect physical deterioration state of the electrode slurry in a simple way.

### Detailed Description of the Invention

### Technical Problem

The present invention relates to a method for inspecting an electrode slurry, and more specifically, to the method for inspecting the electrode slurry that quantifies physical deterioration (gelation, particle agglomeration, etc.) of a positive electrode slurry using an electrochemical method.

The technical problems to be achieved by the present invention are not limited to the technical problems mentioned above, and other technical problems not mentioned will be clearly understood by those of ordinary skill in the art to which the present invention belongs from the following description.

### Solution to Problem

The method for inspecting the electrode slurry of the present invention may comprise:
a positive electrode slurry preparation step (S10) of mixing a positive electrode active material, a conductive material, a binder, and a solvent to prepare a positive electrode slurry;
an electrode insertion step (S20) of inserting a working electrode, a counter electrode, and a reference electrode into the positive electrode slurry;
a first impedance acquisition step (S30) of measuring impedance at a set frequency through the working electrode, the counter electrode, and the reference electrode to obtain a first impedance value;
a second impedance acquisition step (S40) of measuring impedance at the set frequency after a set time has elapsed after the first impedance acquisition step (S30) to obtain a second impedance value; and
a determination step (S50) of comparing a magnitude of the first impedance with a magnitude of the second impedance to determine a state of the positive electrode slurry.

### Effect of the Invention

The method for inspecting the electrode slurry of the present invention enables to detect accurately and quickly the physical deterioration state of the electrode slurry in a simple way.

The method for inspecting the electrode slurry of the present invention can quantify physical deterioration (gelation, particle agglomeration, etc.) of the positive electrode slurry using an electrochemical method.

The method for inspecting the electrode slurry of the present invention enables to predict the solidification level of the electrode slurry only based on the magnitude (absolute value) of impedance in the low-frequency region.

### Brief Description of Drawings

Fig. 1 is a block diagram showing the method for inspecting the electrode slurry of the present invention.
Fig. 2 is a graph showing the impedance spectrum.
Fig. 3 is a graph showing the results according to an experimental example.

### Best Mode for Carrying out the Invention

The method for inspecting the electrode slurry of the present invention may comprise:
a positive electrode slurry preparation step S10 of mixing a positive electrode active material, a conductive material, a binder, and a solvent to prepare a positive electrode slurry;
an electrode insertion step S20 of inserting a working electrode, a counter electrode, and a reference electrode into the positive electrode slurry;
a first impedance acquisition step S30 of measuring impedance at a set frequency through the working electrode, the counter electrode, and the reference electrode to obtain a first impedance value;
a second impedance acquisition step S40 of measuring impedance at the set frequency after a set time has elapsed after the first impedance acquisition step S30 to obtain a second impedance value; and
a determination step S50 of comparing a magnitude of the first impedance with a magnitude of the second impedance to determine a state of the positive electrode slurry.

In the positive electrode slurry preparation step S10 of the method for inspecting the electrode slurry of the present invention, the positive electrode active material may include lithium metal oxide.

In the positive electrode slurry preparation step S10 of the method for inspecting the electrode slurry of the present invention,
the electrically conductive material may be selected from the group consisting of carbon black, conductive fiber, metal powder, conductive whisker, conductive metal oxide, conductive polymer, and mixtures of two or more thereof.

In the positive electrode slurry preparation step S10 of the method for inspecting the electrode slurry of the present invention, the binder may be selected from the group consisting of polyvinylidene fluoride-hexafluoropropylene copolymer (PVDF-co-HEP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polyethylene, polypropylene, polyacrylic acid, styrene butyrene rubber (SBR) and mixtures of two or more of thereof.

In the electrode insertion step S20 of the method for inspecting the electrode slurry of the present invention, the working electrode, the counter electrode, and the reference electrode are provided in a rectangular plate shape, and the working electrode may have a width of 10 mm to 50 mm, a thickness of 0.1 mm to 2 mm, and a length of 10 mm to 50 mm, and the counter electrode may have a width of 10 mm to 50 mm, a thickness of 0.1 mm to 2 mm, and a length of 10 mm to 50 mm, and the reference electrode may have a width of 10 mm to 50 mm, a thickness of 0.1 mm to 2 mm, and a length of 10 mm to 50 mm.

In the first impedance acquisition step S30 and second impedance acquisition step S40 of the method for inspecting the electrode slurry of the present invention, the set frequency may be 10Hz or less.

In the second impedance acquisition step S40 of the method for inspecting the electrode slurry of the present invention, the set time may be 10 hours or more.

The positive electrode slurry measured by the method for inspecting the electrode slurry of the present invention may have a value of 2 or less obtained by dividing the magnitude of the second impedance by the magnitude of the first impedance.

The method for inspecting the electrode slurry of the present invention may further comprise,
between the electrode insertion step S20 and the first impedance acquisition step S30,
an impedance spectrum acquisition step of acquiring impedance spectrum data for a plurality of frequencies through the working electrode, the counter electrode, and the reference electrode;
a function acquisition step of obtaining a function with real parts as an independent variable and imaginary parts as a dependent variable by fitting the impedance spectrum data; and
a set frequency selection step of selecting the set frequency from frequencies corresponding to impedance values with a real part larger than the real part at the peak of the function.

### Mode for Carrying out the Invention

Hereinafter, an embodiment according to the present invention will be described in detail with reference to the attached drawings. In this regard, the size or shape of the components shown in the drawings may be exaggerated for clarity and convenience of explanation. Additionally, terms specifically defined in consideration of the configuration and operation of the present invention may vary depending on the intention or custom of the user or operator. Definitions of these terms should be made based on the content throughout this specification.

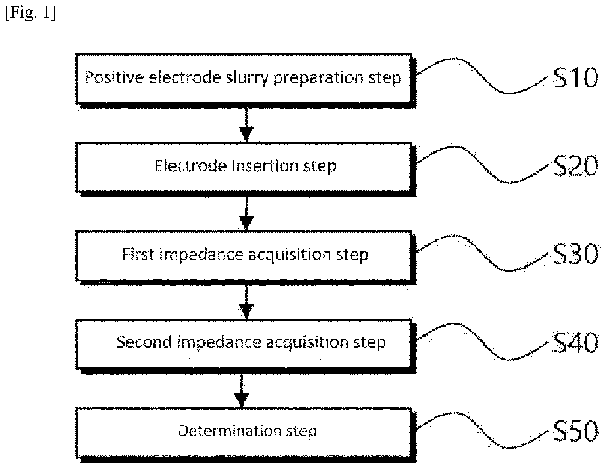

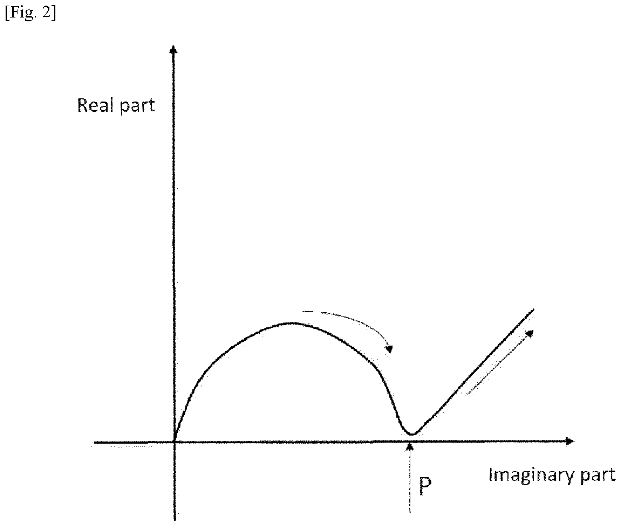

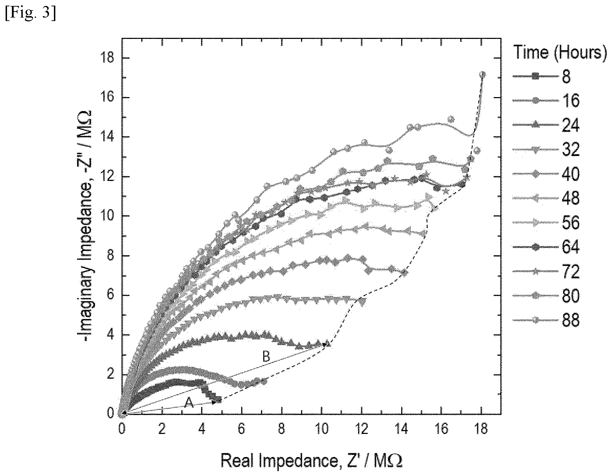

Fig. 1 is a block diagram showing the method for inspecting the electrode slurry of the present invention. Fig. 2 is a graph showing the impedance spectrum. Fig. 3 is a graph showing the results according to an experimental example.

Hereinafter, with reference to Figs. 1 to 3, the method for inspecting electrode slurry the present invention will be described in detail.

The method for inspecting electrode slurry the present invention can predict changes in rheological properties of the electrode slurry by analyzing the impedances of the electrode slurry measured at low frequencies.

In the method for inspecting electrode slurry the present invention, measurement is performed for about 10 seconds when the initial electrode slurry is manufactured to record the initial state, and then immediately before using the electrode slurry, measurement is performed for about 10 seconds to record the current state, which is compared with the initial state to determine the degree of deterioration of the electrode slurry. In other words, the method for inspecting electrode slurry of the present invention can quickly determine whether the electrode slurry is available by simply measuring the electrode slurry stored for a long period for about 10 seconds.

As shown in Fig. 1, the method for inspecting electrode slurry of the present invention may comprise:
a positive electrode slurry preparation step S10 of mixing a positive electrode active material, a conductive material, a binder, and a solvent to prepare a positive electrode slurry;
an electrode insertion step S20 of inserting a working electrode, a counter electrode, and a reference electrode into the positive electrode slurry;
a first impedance acquisition step S30 of measuring impedance at a set frequency through the working electrode, the counter electrode, and the reference electrode to obtain a first impedance value;
a second impedance acquisition step S40 of measuring impedance at the set frequency after a set time has elapsed after the first impedance acquisition step (S30) to obtain a second impedance value; and
a determination step S50 of comparing a magnitude of the first impedance with a magnitude of the second impedance to determine a state of the positive electrode slurry.

In the positive electrode slurry preparation step S10, the positive electrode slurry may be prepared by kneading a positive electrode active material, a conductive material, a binder, and a solvent.

In the positive electrode slurry preparation step S10, the positive electrode active material may include lithium metal oxide.

In the positive electrode slurry preparation step S10, the electrically conductive material may be selected from the group consisting of carbon black, conductive fiber, metal powder, conductive whisker, conductive metal oxide, conductive polymer, and mixtures of two or more thereof.

In the positive electrode slurry preparation step S10, the binder may be selected from the group consisting of polyvinylidene fluoride-hexafluoropropylene copolymer (PVDF-co-HEP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polyethylene, polypropylene, polyacrylic acid, styrene butyrene rubber (SBR) and mixtures of two or more of thereof.

The electrode insertion step S20, the working electrode, the counter electrode, and the reference electrode are provided in a rectangular plate shape, and the working electrode may have a width of 10 mm to 50 mm, a thickness of 0.1 mm to 2 mm, and a length of 10 mm to 50 mm, and the counter electrode may have a width of 10 mm to 50 mm, a thickness of 0.1 mm to 2 mm, and a length of 10 mm to 50 mm, and the reference electrode may have a width of 10 mm to 50 mm, a thickness of 0.1 mm to 2 mm, and a length of 10 mm to 50 mm.

The plate-shaped working electrode, the counter electrode, and the reference electrode may be inserted into the positive electrode slurry at a predetermined distance from each other and electrically connected to a power device for applying alternating current power and a measuring device for measuring impedance.

In the first impedance acquisition step S30 and second impedance acquisition step S40, the set frequency may be 10Hz or less. As described above, in the method for inspecting electrode slurry the present invention, measurement is performed for about 10 seconds at the beginning of electrode slurry production, and then measurement is performed for about 10 seconds just before use to determine the deterioration of the electrode slurry and determine whether the electrode slurry is available for use. This can be achieved by measuring impedance at a relatively low frequency of 10Hz.

The first impedance acquisition step S30 may include measuring the initial state of the electrode slurry. The second impedance acquisition step S40 may include measuring the state of the electrode slurry immediately before use. Therefore, the set time may correspond to the time the electrode slurry was stored.

In the second impedance acquisition step S40, the set time may be 10 hours or more. In other words, the method for inspecting electrode slurry the present invention can quickly determine the rheological deterioration of electrode slurry stored for a long period of time, for example for 10 hours or more.

Specifically, when the magnitude of the second impedance measured by the method for inspecting electrode slurry divided by the magnitude of the first impedance is 2 or less, the electrode slurry may be determined to be in a normal state.

The method for inspecting the electrode slurry of the present invention may further comprise, between the electrode insertion step S20 and the first impedance acquisition step S30,
an impedance spectrum acquisition step of acquiring impedance spectrum data for a plurality of frequencies through the working electrode, the counter electrode, and the reference electrode;
a function acquisition step of obtaining a function with real parts as an independent variable and imaginary parts as a dependent variable by fitting the impedance spectrum data; and
a set frequency selection step of selecting the set frequency from frequencies corresponding to impedance values with a real part larger than the real part at the peak of the function.

When impedance is measured by applying alternating current power for multiple frequencies to the electrode slurry, different impedance values can be obtained for each frequency. The impedance values obtained in this way are displayed on the complex plane by applying a minus to the imaginary part of the impedance, thereby obtaining a graph as shown in Fig. 2. Here, the (0, 0) coordinate is the impedance at the highest frequency, and the further in the direction of the arrow, it shows the impedence value measured at the lower frequency. In addition, if the electrode slurry deteriorates, the diameter of the semicircular portion in the graph of Fig. 2 may be enlarged. Thus, when the electrode slurry deteriorates, the point P shown in Fig. 2 becomes further away from the origin, and the absolute values of impedance in the normal state and the deteriorated state may show a clear difference. The method for inspecting the electrode slurry of the present invention enables precise electrode slurry inspection by using the magnitude of the impedance at lower frequency than the P point as a determination value.

### Experimental Example

The impedance of the positive electrode slurry was measured in a frequency band of 1 MHz to 1 mHz at intervals of 8 hrs. During the measurement interval of 8 hrs, the positive electrode slurry was stored in the condition where the solvent in the positive electrode slurry could vaporize to allow deterioration. The positive electrode slurry was measured 11 times.

Fig. 3 may be a graph showing the impedance spectrum for 11 measurements.

The parts connected by the dotted line in Fig. 3 may be impedance values at a low frequency of 1 mHz. As shown in Fig. 3, it can be seen that at low frequencies, the magnitudes of impedance show a clear difference depending on the degree of deterioration (time of exposure to condition that occurs deterioration).

It is found that the magnitude of impedance (length of A in Fig. 3) at the first measurement and the magnitude of impedance (length of B in Fig. 3) after 16 hours from the first measurement are more than two times different.

Although embodiments according to the present invention have been described above, they are merely illustrative, and those skilled in the art will understand that various modifications and equivalent scope of embodiments are possible therefrom. Therefore, the true technical protection scope of the present invention should be determined by the following patent claims.

### Industrial Applicability

The method for inspecting the electrode slurry of the present invention enables to detect accurately and quickly the physical deterioration state of the electrode slurry in a simple way.

The method for inspecting the electrode slurry of the present invention can quantify physical deterioration (gelation, particle agglomeration, etc.) of the positive electrode slurry using an electrochemical method.

The method for inspecting the electrode slurry of the present invention enables to predict the solidification level of the electrode slurry only based on the magnitude of impedance in the low-frequency region.

## Claims

1. A method for inspecting an electrode slurry comprising:
a positive electrode slurry preparation step (S10) of mixing a positive electrode active material, a conductive material, a binder, and a solvent to prepare a positive electrode slurry;
an electrode insertion step (S20) of inserting a working electrode, a counter electrode, and a reference electrode into the positive electrode slurry;
a first impedance acquisition step (S30) of measuring impedance at a set frequency through the working electrode, the counter electrode, and the reference electrode to obtain a first impedance value;
a second impedance acquisition step (S40) of measuring impedance at the set frequency after a set time has elapsed after the first impedance acquisition step (S30) to obtain a second impedance value; and
a determination step (S50) of comparing a magnitude of the first impedance with a magnitude of the second impedance to determine a state of the positive electrode slurry.

2. The method for inspecting the electrode slurry according to claim 1, wherein in the positive electrode slurry preparation step (S10), the positive electrode active material includes lithium metal oxide.

3. The method for inspecting the electrode slurry according to claim 1, wherein in the positive electrode slurry preparation step (S10), the electrically conductive material is selected from the group consisting of carbon black, conductive fiber, metal powder, conductive whisker, conductive metal oxide, conductive polymer, and mixtures of two or more thereof.

4. The method for inspecting the electrode slurry according to claim 1, wherein in the positive electrode slurry preparation step (S10), the binder is selected from the group consisting of polyvinylidene fluoride-hexafluoropropylene copolymer (PVDF-co-HEP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polyethylene, polypropylene, polyacrylic acid, styrene butyrene rubber (SBR) and mixtures of two or more of thereof.

5. The method for inspecting the electrode slurry according to claim 1, wherein in the electrode insertion step (S20), the working electrode, the counter electrode, and the reference electrode are provided in a rectangular plate shape, and
wherein the working electrode has a width of 10 mm to 50 mm, a thickness of 0.1 mm to 2 mm, and a length of 10 mm to 50 mm,
the counter electrode has a width of 10 mm to 50 mm, a thickness of 0.1 mm to 2 mm, and a length of 10 mm to 50 mm, and
the reference electrode has a width of 10 mm to 50 mm, a thickness of 0.1 mm to 2 mm, and a length of 10 mm to 50 mm.

6. The method for inspecting the electrode slurry according to claim 1, wherein in the first impedance acquisition step (S30) and second impedance acquisition step (S40), the set frequency is 10Hz or less.

7. The method for inspecting the electrode slurry according to claim 6, wherein in the second impedance acquisition step (S40), the set time is 10 hours or more.

8. A positive electrode slurry having a value of 2 or less obtained by dividing the magnitude of the second impedance measured by the method for inspecting the electrode slurry according to claim 7 by the magnitude of the first impedance.

9. The method for inspecting the electrode slurry according to claim 1, further comprising, between the electrode insertion step (S20) and the first impedance acquisition step (S30),
an impedance spectrum acquisition step of acquiring impedance spectrum data for a plurality of frequencies through the working electrode, the counter electrode, and the reference electrode;
a function acquisition step of obtaining a function with real parts as an independent variable and imaginary parts as a dependent variable by fitting the impedance spectrum data; and
a set frequency selection step of selecting the set frequency from frequencies corresponding to impedance values with a real part larger than the real part at the peak of the function.
